# EUROPÄISCHE PATENTANMELDUNG

(11) **EP 2 767 423 A2**
(43) Veröffentlichungstag der Anmeldung: **20.08.2014**
(21) Anmeldenummer: 14155113.5
(22) Anmeldetag: 13.02.2014
(51) Int. Cl.: B60J 7/22

(54) **Mehrteiliges Windschott**

(30) Priorität: 13.02.2013 DE 202013100646 U
(71) Anmelder: Thomas Exclusive Cars GmbH, 01445 Radebeul (DE)
(72) Erfinder: Thomas-Göbelbecker, Sybille, 01445 Radebeul (DE)
(74) Vertreter: Drechsler, Gottfried

(57) **Zusammenfassung**

Aufgabe der Erfindung ist es, ein Windschott zu schaffen, welches über die Breite des Fahrzeuges aus einem Stück besteht und durch entsprechende abnehmbare Befestigungselemente solch eine Breite besitzt, dass es im Kofferraum über die Breite eingelagert werden kann und durch eine mehrteilige Ausführung, die durch Scharniere miteinander verbunden ist, zu einem schmalen Aufbewahrungspaket zusammenklappbar ist.

Ein mehrteiliges Windschott (1) für einen Cabriolet mit einem hinter einer Sitzreihe angeordneten sich über diese hinaus nach oben erstreckenden, über die gesamte Innenraumbreite verlaufenden Windschott (1), welches von mehreren Rahmen eingespannten, elastisch verformbaren Netzen gebildet wird, wobei die einzelnen Rahmen sicher durch Scharniere (5) miteinander verbunden sind. Das Windschott (1) besteht aus drei Teilen (2, 3 und 4), die untereinander durch Scharniere (5) verbunden sind, und zwei Befestigungselementen (6), wobei Teil (2) nach der Montage senkrecht hinter der vorderen Sitzreihe steht und breiter als die Teile (3 und 4) ausgebildet ist und die Teile (3 und 4) eine fast waagerechte Sperrfläche für den Fahrtwind bilden, am gegenüber den Teilen (3 und 4) überstehenden Rahmen von Teil (2), zur Fläche des Teiles (2) senkrecht, sind jeweils rechts und links ein Halteelement (7) mit einem Schlitz (8) zur Aufnahme eines Befestigungselementes (6) angeordnet, wobei das Befestigungselement (6) als Verbindungselement zwischen dem Windschott (1) und einem Aufnahmeelement (9) am Cabriolet ausgebildet ist und an der rückwärtigen Außenseite des Rahmens des Teiles (4) zwei Laschen (10) in der Ebene der Fläche des Teiles (4) angeordnet sind.

## Beschreibung

Mehrteiliges Windschott für einen Cabriolet mit einem hinter einer Sitzreihe angeordneten sich über diese hinaus nach oben erstreckenden, über die gesamte Innenraumbreite verlaufenden Windschott, welches von mehreren Rahmen eingespannten, elastisch verformbaren Netzen gebildet wird.

Bereits in der DE 38 36 375 A1 wird ein Windschutz aus einem eingespannten, elastisch verformbaren Netz beschrieben, der hinter einer Sitzreihe einen nach oben erstreckenden Teil und über die gesamte Innenraumbreite verlaufenden Windschutz besitzt. Der Windschutz kann auch bis zum Boden des Fahrzeuges reichen. Die Befestigung selber ist nicht beschrieben.

In der DE 100 38 714 A1 wird ein Windschott beschrieben, welches über die Breite des Fahrzeuges betrachtet mittels Scharniere auf die Hälfte zusammenklappbar gestaltet ist. Im Detail werden die Scharniere und der Rahmen des Windschotts beschrieben.

In der DE 196 16 448 A1 wird ein Windschott und eine Abdeckung, die schwenkbeweglich miteinander verbunden sind, beschrieben, wobei das Windschott und die Abdeckung mehrmals teilbar ist. Hierzu werden Scharnieranordnungen benutzt.

In der DE 20 2007 018 352 U1 wird ebenfalls ein Windschott beschrieben, der durch eine Verriegelungseinrichtung in eine gefaltete Aufbewahrungsposition schwenkbar ist. Schwerpunkt ist hier die Verriegelungseinrichtung.

Aufgabe der Erfindung ist es, ein Windschott zu schaffen, welches über die Breite des Fahrzeuges aus einem Stück besteht und durch entsprechende abnehmbare Befestigungselemente solch eine Breite besitzt, dass es im Kofferraum über die Breite eingelagert werden kann und durch eine mehrteilige Ausführung, die durch Scharniere miteinander verbunden ist, zu einem schmalen Aufbewahrungspaket zusammenklappbar ist.

Neben dieser platzsparenden Aufbewahrungsform zeichnet sich das erfindungsgemäße Windschott durch eine leichte Montage nur durch eine Person aus. Die erfindungsgemäße Ausführungsform ergibt bei der Montage eine sichere Stabilität und Befestigung im Fahrzeug. Neben dem zusammenklappbaren Windschott sind nur noch zwei abnehmbare, gleichartige Befestigungselemente vorhanden, die identisch und somit austauschbar sind und dadurch keine Verwechslungsgefahr bei der Montage ergeben.

Ein Ausführungsbeispiel der Erfindung ist in den Zeichnungen dargestellt und wird im Folgenden näher beschrieben. Es zeigen:

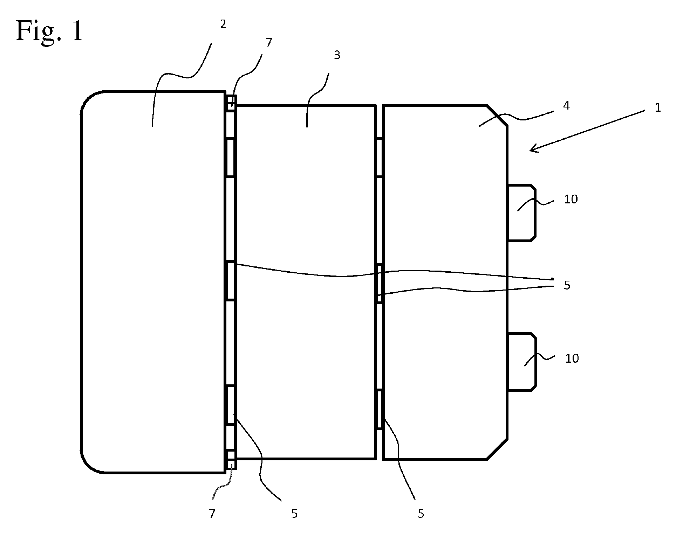

Fig. 1 ein auf eine Ebene aufgeklapptes Windschott in der Draufsicht,

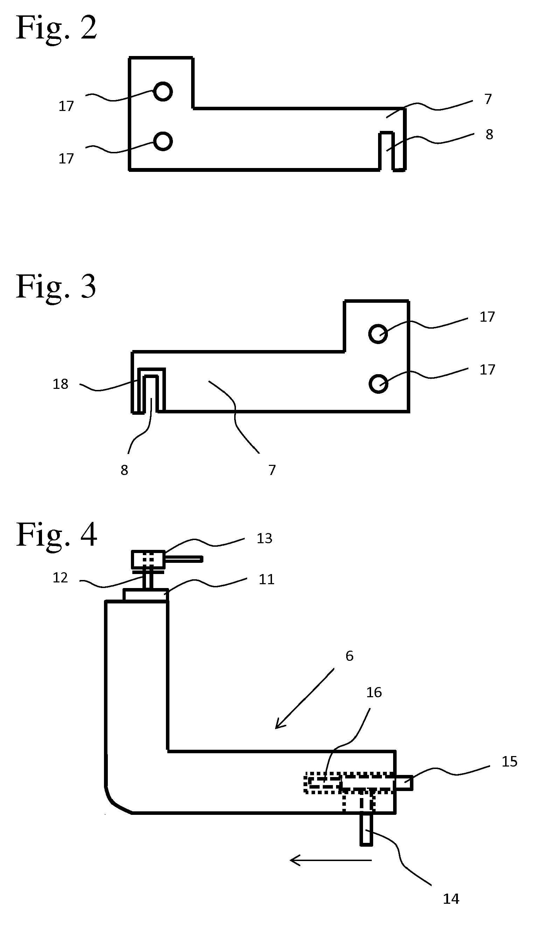

Fig. 2 eine Draufsicht auf ein Halteelement,
Fig. 3 die Unterseite eines Halteelementes,
Fig. 4 die Seitenansicht eines Befestigungselementes und

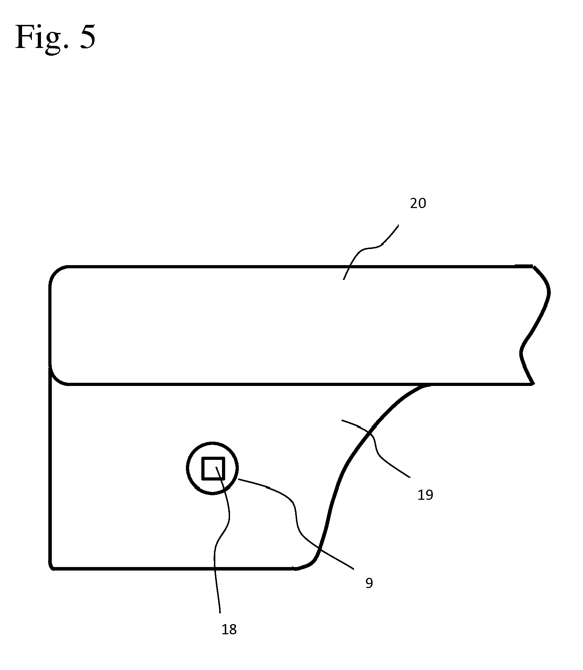

Fig. 5 die Draufsicht auf eine Trägerplatte mit einem Aufnahmeelement für das Windschott unter einem Griffstück.

Das komplette Windschott 1 besteht drei Teilen 2, 3 und 3 mit Scharnieren 5 und Halteelementen 7 und zwei Befestigungselementen 6. Die Teile 2, 3 und 4 bestehen jeweils aus einem Rahmen mit darin eingespannten, elastisch verformbaren netzen. Das Teil 2, welches nach der Montage und bei der Benutzung senkrecht hinter der vorderen Sitzreihe steht, ist etwas breiter als die Teile 3 und 4. In dem überstehenden Bereich des Rahmens von Teil 2 ist im rechten Winkel zur Ebene des Teiles 2 ein Halteelement 7 in Form eines flachen Winkelstücks mit einem kurzen und einem langen Schenkel befestigt. Am kurzen Schenkel sind zwei Bohrungen 17 senkrecht zum Flachmaterial für eine Schraubenbefestigung am Rahmen des Teiles 2 vorgesehen. Das Halteelement 7 besitzt am langen Schenkel einen Schlitz 8. Dieser Schlitz 8 ist am Ende des langen Schenkels quer zur Längsrichtung des langen Schenkels eingearbeitet. Dieser Schlitz 8 besitzt auf der Seite des Halteelements 7 eine nutförmige Ausformung 18, die nach der Montage nach unten zeigt. Diese Ausformung 18 ist so gestaltet, dass die Erhebung 11 des Befestigungselementes 6 in den Schlitz 8 und die komplette Stirnseite des Befestigungselementes 6 mit der Erhebung 11 in die Ausformung 18 passt.

An der rückwärtigen Außenseite des Rahmens von Teil 4 sind zwei Laschen 10 in der Ebene der Fläche des Teiles 4 angeordnet. Diese Laschen können unter die Kopfstützen des Cabriolets geschoben werden und dienen somit zur Befestigung des Windschotts 1 im Cabriolet. Die Teile 3 und 4 des Windschotts 1 bilden nach der Montage eine waagerechte Fläche und somit eine Sperrfläche für den Fahrtwind. Durch die Scharniere 5 zwischen den Teilen 3 und 4 wird ein Durchkippen nach unten verhindert.

Das Befestigungselement 6 besteht aus einem massiven Metallwinkelstück, welcher an einem Winkelende eine Erhebung 11, angepasst an den Schlitz 8 des Halteelementes 7 besitzt. Mittig und senkrecht zu dieser Erhebung 11 ist ein Gewindestift 12 eingesetzt. Auf dem Gewindestift 12 ist eine Feststellmutter 13 vorgesehen. Diese Feststellmutter 13 ist z. B. eine Flügelmutter oder eine Mutter mit einem Feststellhebel und lässt sich somit leicht von Hand festdrehen. Das Befestigungselement 6 wird also bei der Montage am Halteelement 7 im Schlitz 8 und in der Ausformung 18 eingerastet und dann mittels der Feststellmutter 13 fest miteinander verbunden. Am anderen Winkelende des Befestigungselementes 6 ist an der Stirnseite ein über einen Hebel 14 in das Innere des Befestigungselementes 6 verschiebbarer Vierkant 15 angeordnet. Durch eine Feder 16, die zwischen Innenseite Befestigungselement 6 und Vierkant 15 liegt, wirkt eine ständige Kraft auf den Vierkant nach außen. Der Hebel 14 ermöglicht das Einschieben des Vierkantes 15 in das Befestigungselement 6 und verhindert das Herausfallen des Vierkantes 15 aus dem Befestigungselement 6. Hierzu ist ein begrenzter Schlitz als Führung für den Hebel 14 an der Unterseite vorgesehen.

Neben der Befestigung des Windschotts 1 mittels der zwei Laschen 10 unter den Kopfstützen wird das Windschott 1 hauptsächlich mittels der Befestigungselemente 6 in der Seitenverkleidung im Fondbereich des Cabriolets an einer Trägerplatte 19 mit einem Aufnahmeelement 9. Dieses Aufnahmeelement 9 ist ein zylinderförmiger Körper mit einer dem Vierkant 15 des Befestigungselementes 6 angepassten Ausarbeitung 21. Die Trägerplatte 19 ist hier vorteilhaft unter einem Griff 20 an der Seitenverkleidung im Fondbereich des Cabriolets befestigt.

### Zusammenstellung der Bezugszeichen

- 1 -: Windschott
- 2 -: Windschott Teil 1
- 3 -: Windschott Teil 2
- 4 -: Windschott Teil 3
- 5 -: Scharnier
- 6 -: Befestigungselement
- 7 -: Halteelement
- 8 -: Schlitz
- 9 -: Aufnahmeelement
- 10 -: Lasche
- 11 -: Erhebung
- 12 -: Gewindestift
- 13 -: Feststellmutter
- 14 -: Hebel
- 15 -: Vierkant
- 16 -: Feder
- 17 -: Bohrungen
- 18 -: Ausformung
- 19 -: Trägerplatte
- 20 -: Griff
- 21 -: Ausarbeitung

## Patentansprüche

1. Mehrteiliges Windschott für einen Cabriolet mit einem hinter einer Sitzreihe angeordneten sich über diese hinaus nach oben erstreckenden, über die gesamte Innenraumbreite verlaufenden Windschott, welches von mehreren Rahmen eingespannten, elastisch verformbaren Netzen gebildet wird, wobei die einzelnen Rahmen sicher durch Scharniere miteinander verbunden sind,
**daduch gekennzeichnet**,
dass das Windschott (1) aus drei Teilen (2, 3 und 4), die untereinander durch Scharniere (5) verbunden sind, und zwei Befestigungselementen (6) besteht, wobei Teil (2) nach der Montage senkrecht hinter der vorderen Sitzreihe steht und breiter als die Teile (3 und 4) ausgebildet ist und die Teile (3 und 4) eine fast waagerechte Sperrfläche für den Fahrtwind bilden, am gegenüber den Teilen (3 und 4) überstehenden Rahmen von Teil (2), zur Fläche des Teiles (2) senkrecht, sind jeweils rechts und links ein Halteelement (7) mit einem Schlitz (8) zur Aufnahme eines Befestigungselementes (6) angeordnet, wobei das Befestigungselement (6) als Verbindungselement zwischen dem Windschott (1) und einem Aufnahmeelement (9) am Cabriolet ausgebildet ist und an der rückwärtigen Außenseite des Rahmens des Teiles (4) zwei Laschen (10) in der Ebene der Fläche des Teiles (4) angeordnet sind.

2. Mehrteiliges Windschott,
**dadurch gekennzeichnet,**
**dass** das Befestigungselement (6) aus einem massiven Metallwinkelstück besteht, welcher an einem Winkelende eine Erhebung (11), angepasst an den Schlitz (8) des Halteelementes (7), besitzt, in der mittig und senkrecht zur Erhebung (11) ein Gewindestift (12) mit einer Feststellmutter (13) eingesetzt ist und am anderen Winkelende an deren Stirnseite ein über einen Hebel (14) in das Innere des Befestigungselementes (6) verschiebbarer Vierkant (15) angeordnet ist, der durch eine Feder (16) eine ständige Kraft nach außen erfährt.

3. Mehrteiliges Windschott,
**dadurch gekennzeichnet,**
**dass** das Halteelement (7) vorzugsweise als flacher Winkel mit einem kurzem und einem langen Schenkel ausgebildet ist, wobei an dem kurzen Schenkel senkrecht zum Flachmaterial Bohrungen (17) vorgesehen sind und am Ende des langen Schenkels quer zur Längsrichtung des langen Schenkels der Schlitz (8) eingearbeitet ist und dieser Schlitz (8) auf einer Seite des Halteelements (7) eine Ausformung (18) auf die Größe der Stirnseite mit der Erhebung (11) des Befestigungselementes (6) nutförmig ausgearbeitet ist.

4. Mehrteiliges Windschott,
**dadurch gekennzeichnet,**
**dass** das Aufnahmeelement (9) ein zylinderförmiger Körper mit einer dem Vierkant (15) des Befestigungselementes (6) angepassten Ausarbeitung (21) ist, welches auf einer Trägerplatte (19) befestigt ist, die wiederum unter einem Griff (20) an der Seitenverkleidung im Fondbereich des Cabriolets befestigt ist.
